Europäisches Patentamt

European Patent Office

Office européen des brevets

(11) Publication number: **0 126 600**
**B1**

# EUROPEAN PATENT SPECIFICATION

(45) Date of publication of patent specification: **01.03.89**

(51) Int. Cl.⁴: **G 01 N 21/77**

(21) Application number: **84303207.9**

(22) Date of filing: **11.05.84**

(54) Optical fibre probe.

(30) Priority: **17.05.83 GB 8313527**
**25.05.83 GB 8314519**

(43) Date of publication of application:
**28.11.84 Bulletin 84/48**

(45) Publication of the grant of the patent:
**01.03.89 Bulletin 89/09**

(84) Designated Contracting States:
**AT BE DE FR GB IT LU NL SE**

(56) References cited:
**EP-A-0 073 558**
**WO-A-83/03344**
**US-A-3 404 962**
**US-A-4 003 707**

**ANALYTICAL CHEMISTRY, vol. 52, 1980, pages
864-869, American Chemical Society,
Washington, D.C., US; J.I. PETERSON et al.:
"Fiber optic pH probe for physiological use"**

(73) Proprietor: **ELF U.K. PLC
Knightsbridge House 197 Knightsbridge
London SW7 1RZ (GB)**

(72) Inventor: **Kirkbright, Gordon Frank
deceased (GB)**
Inventor: **Welti, Neal Arthur
954 Doncaster Road
Doncaster East Victoria 3109 (AU)**

(74) Representative: **Atkinson, Peter Birch et al
Marks & Clerk Scottish Life House Bridge Street
Manchester M3 3DP (GB)**

Courier Press, Leamington Spa, England.

## Description

This invention relates to a probe for monitoring a change in a parameter of interest, e.g. a chemical parameter such as the nature or concentration of a chemical species in solution or in the gaseous phase.

Various types of electrical probes are already known. These probes do however have a number of disadvantages. Firstly, the probes rely on the use of electrical signals which may be undesirable if the probe is to be used in an inflammable environment. Secondly, there may be impedance effects in the electrical probe which adversely affect the measurement being made. The problems associated with the impedance effects become particularly acute when miniaturised probes are required. In this case, it may be necessary to operate the probe within a Faraday cage to avoid the impedance effects.

Anal. Chem. 1980, 52, 864—869 discloses a fibre optic pH probe for physiological use having a sensor tip and optical fibres for transmitting light to and from the tip. Within the tip is a packing of hydrophilic polyacrylamide microspheres having covalently bonded thereto a dye (e.g. Phenol Red) sensitive to pH change. The end of the tip is sealed with an optical adhesive. The polyacrylamide has admixed therewith smaller polystyrene microspheres which provide for effective light scattering so that light which is emitted from one optical fibre passes into the packing, is absorbed by the dye and by multiple scattering is returned to the other optical fibre for transmission to a detector.

US—A—3 404 962 discloses apparatus for detecting a constituent in a mixture in which a selectively permeable tube made, for example, from polyethylene or Teflon is located in a container in which is held a sample of a material to be analysed. The tube contains an electrolyte which may incorporate an indicator which changes colour in response to a pH change in the electrolyte occasioned by a constituent of the mixture to be analysed diffusing through the walls of the tube. This colour change may be detected spectroscopically.

According to the present invention there is provided a probe comprising a sensor portion having an outer porous membrane and, within the sensor portion, a resin on which is immobilised a compound having spectral characteristics sensitive to a change to be monitored by the probe, and optical fibre means for transmitting light to said compound and for transmitting light from said compound to detect any spectral change therein characterised in that the resin on which said compound is immobilised is a hydrophobic resin and in that the membrane is a hydrophobic membrane.

In use, the probe of the invention is associated with light source and a light detector. Light from the source is transmitted along the optical fibre to the compound (herein referred to as the indicator compound) having spectral characteristics sensitive to a change to be monitored and back from the indicator compound to the detector. The detector may be set to detect the intensity of light returned from the indicator compound at a wavelength at which the intensity will alter when the spectral characteristics of the indicator compound change due to a change in the system under investigation.

The use of hydrophobic porous membranes and hydrophobic resins are important features of the invention as the hydrophobicity of these materials ensures that interactions between the components of the analyte phase, except the analyte species itself, and all parts of the probe except for the indicating compound or formulation are minimised.

The porous membrane serves to retain the resin and indicator compound in position and allows any chemical species under investigation to diffuse through to the indicator compound whilst inhibiting the diffusion of undesired particulate matter. Also for vapour phase or gaseous state determinations where the indicator compounds may require some degree of hydration and the membrane can serve to retain moisture by virtue of its hydrophobicity.

PTFE (polytetrafluoroethylene) is the preferred material for the porous hydrophobic membrane.

The hydrophobic resin which serves to support and retain the indicator compound is preferably a crosslinked polystyrene, particularly a crosslinked polystyrene without any chemically active groups. Polystyrene resins cross-linked with divinyl benzene may be used as the resin. Suitable resins are the XAD resins (produced by Rohm and Haas). Resins supplied in granular form are preferably ground before use in the probe. The use of powders enhances the diffuse reflection or emission characteristics at the interface between the optical fibres and the resin (see below) and also allows the construction of smaller probes.

The indicator compound is adsorbed on the retained by the hydrophobic resin, i.e. the resin immobilises the indicator compound. This indicator compound is at least one reagent which undergoes a change in spectral characteristics in response to a change in the parameter under investigation, e.g. a change in the nature or concentration of a particular chemical species investigation. The spectroscopic change may be one of phosphorescence, fluorescence or simply colour change depending on the reagent used. Suitable indicator compounds are colorimetric indicator dyestuffs selected having regard to the change which the probe is to monitor. Bromothymol Blue is one example of such a colorimetric dyestuff. Bromothymol Blue is yellow in acid solution and blue in alkaline solution and may thus be used in a probe intended for monitoring pH changes.

The transmissive and receptive optical fibre means may be a single fibre or bundle of fibres arranged in ordered or random fashion. The use of a single fibre does however require complex instrumentation to separate the source light signal from the returning light signal. In practice, it is more convenient to use a bundle of fibres which is split such that one half is connected to the light source and the other to the detector.

The interface between the optical fibre means and the resin with immobilised indicator compound may take the form of a direct and intimate contact or the optical fibres may be maintained at a discrete distance from the resin by an inert transparent medium preferably indexed matched to the core material of the fibre. The invention will be further described by way of example only with reference to the accompanying drawing which shows a sectional view of the sensor of one embodiment of probe in accordance with the invention.

The illustrated probe 1 comprises an optical fibre cable 2 (including sheathing 3 and a plurality of individual fibres 4) and a sensor 5 formed as a tip for the probe 1. The sensor 5 itself comprises an outer plastics tube 6, one end of which is fitted over the end of the sheathing 3 of the cable 2, and an inner guide tube 7 one end of which abuts against sheathing 3 and the other end of which projects beyond tube 6. Provided across the end of tube 7 is a porous PTFE membrane 8. Between the end of tube 7 and the membrane 8 is a material 9 formed of a cross-linked powdered polystyrene having immobilised thereon a reagent giving a spectroscopic change in response to a change in the parameter to be investigated. The material 9 is, as will be seen from the drawing, located beyond the end of tube 7.

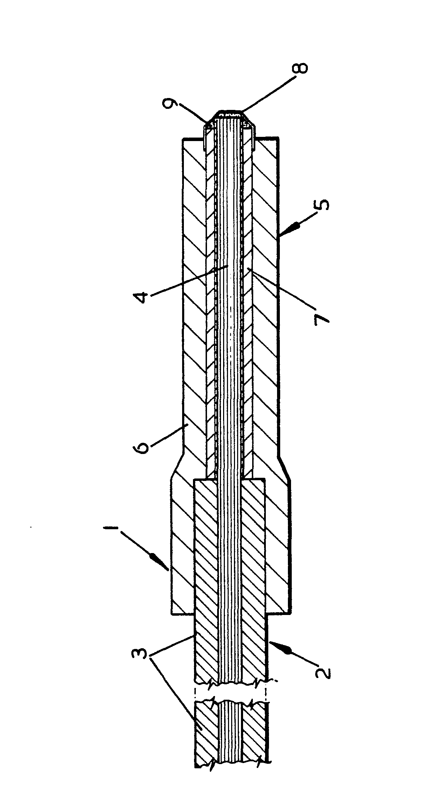

As illustrated in Fig. 1, the optical fibres 4 are in intimate contact with the material 9. At their ends remote from the sensor 5, one half of the optical fibres 4 are connected to a light source (not shown) and the other half are connected to a detector (not shown). The distance of the light source and detector from the sensor 5 may be limited only by optical losses in the cable 2 so that the sensor 5 may at some distance remote from the light source and detector.

To give an idea of size, the sensor 5 of the illustrated probe 1 may be of a length of about 10mm whereas the optical fibre cable may have a diameter of about 2mm. These dimensions are given purely by way of example, and may of course be different to suit particular applications for the probe 1. Particularly, miniaturisation of the sensor would allow use of the probe in clinical and other biomedical applications.

The illustrated probe is particularly useful as a pH sensor although it does have many other applications.

For use as a pH sensor, the indicator compound may be Bromothymol Blue which as mentioned above is yellow in acid and blue in alkali. In operation, the sensor 5 is positioned in a solution of which the pH is to be investigated. The light source used is one emitting red light at a wavelength of 635 nanometers and the detector measures the intensity of light returned from the sensor at this wavelength. When the solution under investigation is alkaline, the Bromothymol reagent is blue and absorbs a high proporation of the incident red light. When the solution becomes acidic, the Bromothymol reagent becomes yellow and reflects a high proportion of the incident red light which is then retransmitted *via* the fibre to the detector. This change in the spectral characteristics of the Bromothymol reagent is detected by the detector which thus indicates that the solution has undergone a pH change from alkaline to acid. It should at this point be noted that hydrogen ion diffusion through the membrane 8 is rapid, and this is believed to be due to the fact that membrane 8 projects beyond the end of tube 7.

The probe may thus be used simply to indicate a change of pH between alkalinity and acidity. Alternatively the probe may previously have been calibrated so that the extent of the change in intensity of the detected wavelength gives a quantitative indication of the pH change.

The probe of the invention has a number of significant advantages.

Firstly, the probe is of robust construction and this is advantageous particularly for pH measurements as the use of fragile glass electrodes is avoided. Coupled with this, the flexibility of the optical fibres allows the probe to be used in locations which would be inaccessible with rigid glass electrodes.

Secondly, the sensor of the probe may be positioned in a hazardous (e.g. inflammable) environment whereas the electrical instrumentation for the probe (i.e. light source, detector) may be remote from the probe outside of the hazardous environment. The probe is intrinsically safe in inflammable environments as no electrical signals pass to the remote instrumentation.

Thirdly, there are no adverse impendance effects resulting from the small size of the probe as might be the case for miniaturised electrical probes.

## Claims

1. A probe (1) comprising a sensor portion (5) having an outer porous membrane (8) and, within the sensor portion, a resin (9) on which is immobilised a compound having spectral characteristics sensitive to a change to be monitored by the probe, and optical fibre means (4) for transmitting light to said compound and for transmitting light from said compound to detect any spectral change therein characterised in that the resin on which said compound is immobilised is a hydrophobic resin and in that the membrane is a hydrophobic membrane.

2. A probe as claimed in claim 1 wherein the sensor (5) is provided as a tip for the probe (1).

3. A probe as claimed in claim 2 wherein the porous membrane (8) forms a projection at the end of the tip.

4. A probe as claimed in any one of claims 1 to 3 wherein the optical fibre means (4) are in intimate contact with the resin (9) and immobilised compound.

5. A probe as claimed in any one of claims 1 to 4 wherein the membrane (8) is of polytetrafluoroethylene.

6. A probe as claimed in any one of claims 1 to 5 wherein the resin (9) is used in powdered form.

7. A probe as claimed in any one of claims 1 to 6 wherein the hydrophobic resin (9) is a cross-linked polystyrene.

8. A probe as claimed in claim 7 wherein the resin (9) has substantially no chemically active functional groups.

9. A probe as claimed in claim 7 or 8 wherein the polystyrene is cross-linked with divinyl benzene.

10. A probe as claimed in any one of claims 1 to 9 wherein the immobilised compound is a colorimetric reagent.

11. A probe as claimed in claim 10 wherein the immobilised compound is Bromothymol Blue.

## Patentansprüche

1. Meßfühler (1), ümfassend ein Sensorteil (5) mit einer äußeren porösen Membran (8) und, innerhalb des Sensorteiles, ein Harz (9), aüf dem eine Verbindung immobilisiert ist, die spektrale Eigenschaften hat, die empfindlich für eine von dem Meßfühler zu überwachende Änderung sind, sowie eine optische Faseranordnung (4), üm das Licht zu der Verbindung zu übertragen und um Licht von der Verbindung zu übertragen, um jede spektrale Änderung darin abzutasten, dadurch gekennzeichnet, daß das Harz, auf dem die Verbindung immobilisiert ist, ein hydrophobes Harz ist ünd daß die Membran eine hydrophobe Membran ist.

2. Meßfühler nach Anspruch 1, wobei der Sensor (5) als Spitze für den Meßfühler (1) ausgebildet ist.

3. Meßfühler nach Anspruch 2, wobei die poröse Membran (8) einen Vorsprung am Ende der Spitze bildet.

4. Meßfühler nach einem der Ansprüche 1 bis 3, wobei die optische Faseranordnung (4) in innigem Kontakt mit dem Harz (9) und der immobilisierten Verbindung steht.

5. Meßfühler nach einem der Ansprüche 1 bis 4, wobei die Membran (8) aus Polytetrafluorethylen besteht.

6. Meßfühler nach einem der Ansprüche 1 bis 5, wobei das Harz (9) in pulverförmiger Form verwendet wird.

7. Meßfühler nach einem der Ansprüche 1 bis 6, wobei das hydrophobe Harz (9) ein vernetztes Polystyrol ist.

8. Meßfühler nach Anspruch 7, wobei das Harz (9) im wesentlichen keine chemisch aktiven funktionalen Gruppen hat.

9. Meßfühler nach Anspruch 7 oder 8, wobei das Polystyrol mit Divinylbenzol vernetzt ist.

10. Meßfühler nach einem der Ansprüche 1 bis 9, wobei die immobilisierte Verbindüng eine kolorimetrisches Reagens ist.

11. Meßfühler nach Anspruch 10, wobei die immobilisierte Verbindung Bromthymolblau ist.

## Revendications

1. Sonde (1) comprenant une partie de détecteur (5) munie d'une membrane poreuse extérieure (8), et à l'intérieur de la partie de détecteur, une résine (9) sur laquelle est immobilisé un composé ayant de caractéristiques spectrales sensibles aux variations qui doivent être suives par la sonde et des moyens de fibres optiques (4) pour transmettre la lumière audit compose et pour transmettre la lumière depuis ledit composé pour détecteur toute variation spectrale dans celui-ci, caractérisée en ce que la résine sur laquelle ledit composé est immobilisé est une résine hydrophobe et que la membrane est une membrane hydrophobe.

2. Sonde selon la revendication 1, dans laquelle le détecteur (5) est prévu sous la forme d'une pointe de la sonde (1).

3. Sonde selon la revendication 2, dans laquelle la membrane poreuse (8) forme une saillie à l'extrêmité de la pointe.

4. Sonde selon l'une quelconque des revendications de 1 à 3, dans laquelle les moyens de fibres optiques (4) sont en contact intime avec la résine (9) et le composé immobilisé.

5. Sonde selon l'une quelconque des revendications de 1 à 4, dans laquelle la membrane (8) est constituée de polytétrafluoréthylène.

6. Sonde selon l'une quelconque des revendications de 1 à 5, dans laquelle la résine (9) est utilisée sous forme pulvérisée.

7. Sonde selon l'une quelconque des revendications de 1 à 6, dans laquelle la résine hydrophobe (9) est un polystyrène réticulé.

8. Sonde selon la revendication 7, dans laquelle la résine (9) ne contient pratiquement pas de groupe fonctionnel chimiquement actif.

9. Sonde selon la revendication 7 ou 8, dans laquelle le polystyrène est réticulé avec le divinylbenzène.

10. Sonde selon l'une quelconque des revendications de 1 à 9, dans laquelle le composé immobilisé est un réactif colorimétrique.

11. Sonde selon la revendication 10, dans laquelle le composé immobilisé est le bleu de bromothymol.